# FASCICULE DE BREVET EUROPEEN

(11) **EP 2 191 752 B1**
(45) Date de publication et mention de la délivrance du brevet: **16.11.2011**
(21) Numéro de dépôt: 09176824.2
(22) Date de dépôt: 24.11.2009
(51) Int. Cl.: A47J 27/21, A47J 31/44, A47J 31/54

(54) **Fontaine à eau chaude**
Warmes Wasser erzeugende Ausgabeeinrichtung
Dispensing device for making warmed water

(30) Priorité: 01.12.2008 FR 0858184
(43) Date de publication de la demande: 02.06.2010
(73) Titulaire: SEB SA, 69130 Ecully (FR)
(72) Inventeur: Buszko, Christophe, 61000 Saint Germain du Corbéïs (FR); Bichet, Fabrice, 53100, Mayenne (FR)
(74) Mandataire: Lemoine, Jean-Sébastien

(56) Documents cités:
- EP-A- 0 467 480
- EP-A- 0 792 970
- EP-A- 1 000 575
- FR-A- 2 561 893
- GB-A- 2 366 357
- US-A- 5 019 690

## Description

La présente invention concerne un appareil électroménager de distribution d'eau chaude, appelée fontaine à eau chaude.

On connaît, d'après le document EP 467 480, un organe de production d'eau chaude qui comprend une ouverture d'évacuation d'eau chaude destinée à être reliée à un robinet de distribution d'eau domestique d'un évier, le robinet étant par ailleurs immobilisé par rapport à cet évier.

On connaît également un appareil électroménager de distribution d'eau chaude du type comprenant, d'une part, un organe de production d'eau chaude, et, d'autre part, un robinet de distribution qui est monté coulissant par rapport à l'organe de production d'eau chaude.

Un tel appareil permet de délivrer à la demande de l'eau chaude du fait de l'organe de production à'eau chaude qui est particulièrement puissant et permet de porter l'eau le traversant à une température élevée (proche de 100°C), contrairement à une bouilloire qui nécessite un temps d'attente résultant du fait que son dispositif de chauffe doit chauffer la totalisé de l'eau qu'elle contient. Le coulissement du robinet de distribution permet d'adapter la position de l'ouverture de distribution d'eau à la hauteur du récipient destiné à recevoir l'eau. De façon classique, l'organe de production d'eau chaude est prolongé par un tube de sortie d'eau dans lequel est monté coulissant un tube du robinet. Il en résulte un premier inconvénient qui est la nécessité d'avoir un joints torique assurant l'étanchéité entre les deux tubes télescopiques (sans compter les risques de fuite), et un deuxième qui est une variation de la longueur du circuit parcouru par l'eau chaude.

La présente invention vise à remédier aux inconvénients précités.

Selon l'invention, l'appareil du type précité comprend un tube souple raccordant le robinet à l'organe de production.

Un tel tube est facilement mis en place du fait qu'il forme une partie du circuit d'eau chaude. De plus, quelle que soit la position relative du robinet, la longueur du trajet reste la même, ce qui permet de limiter les variations de température et de pression de l'eau en sortie du robinet.

D'autres particularités et avantages de la présente invention apparaîtront dans la description d'un mode de réalisation donné à titre d'exemple non limitatif et illustré par les dessins mis en annexe dans lesquels :
La figure 1 est une vue en perspective d'un appareil de distribution d'eau chaude conforme à la présente invention,
La figure 2 est une vue en coupe illustrant la jonction entre le robinet de distribution et l'organe de production d'eau chaude dans l'appareil de la figure 1,

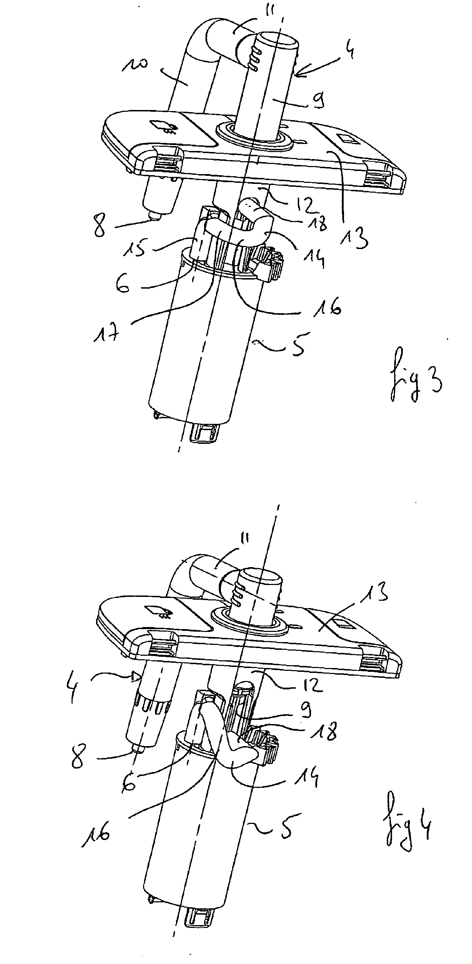

La figure 3 est une vue en perspective des éléments illustrés à la figure 2, le robinet étant dans une position déployée, et
La figure 4 est une vue similaire à la figure 3, le robinet étant dans sa position escamotée.

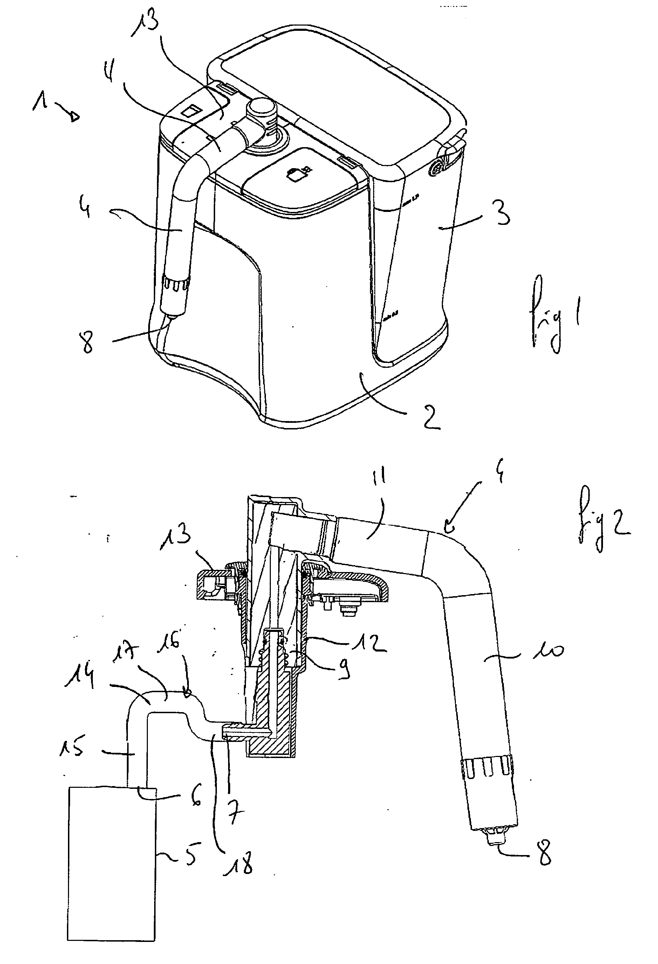

Comme on peut le voir à la figure 1, un appareil électroménager de distribution d'eau chaude 1 (une fontaine à eau chaude 1) comporte un corps de production d'eau chaude 2, un réservoir d'eau 3 amovible du corps 2, et un robinet de distribution 4 monté coulissant verticalement par rapport au corps 2 entre une position déployée (position haute) et une position escamotée (position basse). Le fait que le robinet de distribution 4 soit coulissant permet de placer facilement le récipient qui est destiné à recevoir l'eau chaude (en relevant le robinet) et de le remplir en toute sécurité (en rabaissant le robinet), quelle que soit la hauteur du récipient.

Dans le corps 2 se trouve un organe de production d'eau chaude 5 qui comprend une ouverture d'entrée d'eau froide qui est reliée au réservoir d'eau 3 via une pompe, et une ouverture de sortie d'eau chaude 6.

Le robinet de distribution 4 comprend un orifice d'entrée d'eau chaude 7 qui est relié à l'ouverture de sortie 6 de l'organe de production d'eau chaude 5, et une buse de sortie 8 qui permet la distribution de l'eau. Dans le présent mode de réalisation, comme on peut le voir aux différentes figures, le robinet de distribution 4 a une forme générale en U inversé. Il comprend un tube amont 9 (sensiblement vertical) qui est relié à l'organe de production d'eau chaude 5, un tube aval 10 (sensiblement vertical) qui porte la buse de sortie 8, et un tube intermédiaire 11 (sensiblement horizontal) qui relie les deux tubes amont 9 et aval 10.

Le coulissement du robinet de distribution 4 est assuré par le tube amont 9 qui est guidé dans un guide 12 sensiblement cylindrique. Ce guide 12 est porté par une paroi extérieure 13 du corps 2 qui est traversée par le robinet 4 (par le tube amont 9).

En outre, l'appareil de distribution d'eau chaude 1 comprend également un tube souple 14 raccordant le robinet de distribution 4 à l'organe de production d'eau chaude 5. Plus précisément, le tube souple 14 relie l'ouverture de sortie 6 de l'organe de production 5 à l'orifice d'entrée 7 du robinet 4 (ici, l'orifice d'entrée 7 portée par le tube amont 9). Le tube souple 14 permet de relier de façon étanche l'organe de production 5 au robinet 4 quelle que soit la position de ce dernier. Dans le présent exemple, le tube souple 14 est en silicone et il présente une dureté shore 60 assurant sa souplesse.

Ainsi, quelle que soit la position du robinet 4, la distance parcourue par l'eau chaude est constante.

Par ailleurs, le tube souple 14 est relativement court (ici, 88 mm) et peu encombrant (son diamètre externe est de 9,5 mm et sa paroi a une épaisseur de 3 mm).

Dans le présent exemple, le tube souple 14 a une forme permettant sa fixation à un ergot vertical définissant l'ouverture de sortie 6 d'eau chaude de l'organe de production 5 et à un ergot horizontal définissant l'orifice d'entrée 7 du robinet 4. En configuration non sollicitée, il présente un premier bras rectiligne 15 partant de son extrémité se connectant à l'organe de production 5 (en position verticale quand correctement fixé à cet organe 5), et un second bras 16 en forme de U dont les deux branches 17, 18 parallèles sont perpendiculaires au premier bras 15, les deux branches étant disposées l'une au-dessus de l'autre selon la direction du premier bras 15. Ainsi, par cette forme, malgré sa courte longueur, le tube souple peut facilement s'adapter aux positions du robinet 4, le mouvement de la branche 18 du second bras 16 fixée au robinet 4 pouvant être assimilé à une rotation autour de l'autre branche 17 du second bras 16. Ici, quand le robinet 4 est en position escamotée, les deux extrémités libres du tube souple 14 sont sensiblement au même niveau.

## Revendications

1. Appareil électroménager de distribution d'eau chaude (1) comprenant un organe de production d'eau chaude (5) et un robinet de distribution (4), **caractérisé en ce que** le robinet de distribution (4) est monté coulissant par rapport à l'organe de production d'eau chaude (5), et **en ce que** l'appareil comprend un tube souple (14) raccordant le robinet (4) à l'organe de production (5).

2. Appareil (1) selon la revendication 1, **caractérisé en ce que** le tube souple (14) a une forme permettant sa fixation à un ergot vertical définissant l'orifice de sortie d'eau chaude de l'organe de production d'eau chaude (5), et à un ergot horizontal définissant l'orifice d'entrée du robinet (4).

3. Appareil (1) selon la revendication 2, **caractérisé en ce que** le tube souple (14) présente un premier bras (15) fixé à l'organe de production (5), et un second bras (16) en forme de U fixé au robinet (4), les deux branches (17, 18) du second bras (16) étant perpendiculaires au premier bras (15) et disposées l'une au-dessus de l'autre selon la direction du premier bras (15).

4. Appareil (1) selon l'une des revendications 1 à 3, **caractérisé en ce que** le tube souple (14) est en silicone.

5. Appareil (1) selon l'une des revendications 1 à 4, **caractérisé en ce que** le tube souple (14) présente une dureté shore 60.

6. Appareil (1) selon l'une des revendications 1 à 5, **caractérisé en ce que** le tube souple (14) a une longueur de 88 mm.

7. Appareil (1) selon l'une des revendications 1 à 6, **caractérisé en ce que** le tube souple (14) a un diamètre externe de 9,5 mm.

8. Appareil (1) selon l'une des revendications 1 à 7, **caractérisé en ce que** le tube souple (14) a une épaisseur de 3 mm.

9. Appareil (1) selon l'une des revendications 1 à 8, **caractérisé en ce que** le robinet (4) comporte un tube aval (10) qui porte une buse de sortie (8) de l'eau chaude, un tube amont (9) qui est relié au tube souple (14), et un tube intermédiaire (11) qui relie le tube amont (9) au tube aval (10), le tube amont (9) traversant une paroi extérieure (13) de l'appareil (1) et étant monté coulissant dans un guide (12) porté par cette paroi (13).

## Claims

1. Domestic electrical appliance for dispensing hot water (1) including a hot water production unit (5) and a dispensing nozzle (4), **characterised in that** the dispensing nozzle (4) is slidably mounted with respect to the hot water production unit (5), and **in that** the appliance includes a flexible tube (14) connecting the nozzle (4) to the production unit (5).

2. Appliance (1) according to claim 1, **characterised in that** the flexible tube (14) has a shape enabling it to be attached to a vertical lug defining the outlet orifice of the hot water production unit (5), and to a horizontal lug defining the inlet orifice of the nozzle (4).

3. Appliance (1) according to claim 2, **characterised in that** the flexible tube (14) has a first arm (15) attached to the production unit (5), and a second U-shaped arm (16) fixed to the nozzle (4), the two branches (17, 18) of the second arm (16) being perpendicular to the first arm (15) and disposed one above the other in the direction of the first arm (15).

4. Appliance (1) according to any one of claims 1 to 3, **characterised in that** the flexible tube (14) is made of silicone.

5. Appliance (1) according to any one of claims 1 to 4, **characterised in that** the flexible tube (14) has a Shore hardness of 60.

6. Appliance (1) according to any one of claims 1 to 5, **characterised in that** the flexible tube (14) has a length of 88 mm.

7. Appliance (1) according to any one of claims 1 to 6, **characterised in that** the flexible tube (14) has an external diameter of 9.5 mm.

8. Appliance (1) according to any one of claims 1 to 7, **characterised in that** the flexible tube (14) has a thickness of 3 mm.

9. Appliance (1) according to claim 1-8, **characterised in that** the nozzle (4) includes a downstream tube (10) which carries a hot water outlet nozzle (8), an upstream tube (9) which is connected to the flexible tube (14), and an intermediate tube (11) which connects the upstream tube (9) to the downstream tube (10), the upstream tube (9) passing through an outer wall (13) of the appliance (1) and being slidably mounted in a guide (12) carried by the wall (13).

## Patentansprüche

1. Elektrohaushaltsgerät (1) zum Spenden von Warmwasser umfassend eine Warmwassererzeugungseinrichtung (5) und einen Abgabehahn (4), **dadurch gekennzeichnet, dass** der Abgabehahn (4) in Bezug auf die Warmwassererzeugungseinrichtung (5) gleitend gelagert ist und dass das Gerät einen weichen Schlauch (14) umfasst, der den Abgabehahn (4) an die Einrichtung (5) anschließt.

2. Elektrohaushaltsgerät (1) nach Anspruch 1, **dadurch gekennzeichnet, dass** der weiche Schlauch (14) eine Form hat, die dessen Befestigung an einem vertikalen Anschlussstück, welches die Warmwasserausflussöffnung der Warmwassererzeugungseinrichtung (5) definiert, und an einem horizontalen Anschlussstück ermöglicht, welches die Einlassöffnung des Abgabehahns (4) definiert.

3. Elektrohaushaltsgerät (1) nach Anspruch 2, **dadurch gekennzeichnet, dass** der weiche Schlauch (14) einen ersten Arm (15), der an der Warmwassererzeugungseinrichtung (5) befestigt ist, und einen U-förmigen, zweiten Arm (16) aufweist, der am Abgabehahn (4) befestigt ist, wobei die beiden Anschlüsse (17, 18) des zweiten Arms (16) rechtwinklig zum ersten Arm (15) stehen und einer der Anschlüsse in bezug auf den anderen oberhalb in Richtung des ersten Arms (15) angeordnet ist.

4. Elektrohaushaltsgerät (1) nach einem der Ansprüche 1 bis 3, **dadurch gekennzeichnet, dass** der weiche Schlauch (14) aus Silikon gefertigt ist.

5. Elektrohaushaltsgerät (1) nach einem der Ansprüche 1 bis 4, **dadurch gekennzeichnet, dass** der weiche Schlauch (14) eine Shorehärte von 60 aufweist.

6. Elektrohaushaltsgerät (1) nach einem der Ansprüche 1 bis 5, **dadurch gekennzeichnet, dass** der weiche Schlauch (14) eine Länge von 88 mm hat.

7. Elektrohaushaltsgerät (1) nach einem der Ansprüche 1 bis 6, **dadurch gekennzeichnet, dass** der weiche Schlauch (14) einen Außendurchmesser von 9,5 mm hat.

8. Elektrohaushaltsgerät (1) nach einem der Ansprüche 1 bis 7, **dadurch gekennzeichnet, dass** der weiche Schlauch (14) eine Dicke von 3 mm hat.

9. Elektrohaushaltsgerät (1) nach einem der Ansprüche 1 bis 8, **dadurch gekennzeichnet, dass** der Abgabehahn (4) einen nachgelagerten Schlauch (10), der eine Warmwasserauslassdüse (8) hält, einen vorgelagerten, mit dem weichen Schlauch (14) verbundenen Schlauch (9) und einen Zwischenschlauch (11) aufweist, der den vorgelagerten (9) mit dem nachgelagerten Schlauch (10) verbindet, wobei der vorgelagerte Schlauch (9) eine Außenwand (13) des Elektrohaushaltsgerätes (1) durchdringt und in einer von der Außenwand (13) getragenen Führung (12) gleitend gelagert ist.
